# EUROPEAN PATENT SPECIFICATION

(11) **EP 1 045 062 B1**
(45) Date of publication and mention of the grant of the patent: **17.12.2003**
(21) Application number: 99308608.1
(22) Date of filing: 29.10.1999
(51) Int. Cl.: D06F 37/20, D06F 33/02, D06F 37/30

(54) **Washing machine**
Waschmaschine
Machine à laver

(30) Priority: 26.03.1999 KR 9910519
(43) Date of publication of application: 18.10.2000
(73) Proprietor: SAMSUNG ELECTRONICS CO., LTD., Suwon-City, Kyungki-do (KR)
(72) Inventor: Joo, Ki-Hun, Kwonsun-Gu, Suwon-City, Kyungki-Do (KR)
(74) Representative: Geary, Stuart Lloyd

(56) References cited:
- EP-A- 0 313 339
- EP-A- 0 394 177
- EP-A- 1 048 774
- DE-A- 3 416 639

## Description

The present invention relates to a method of spin drying using a washing machine having a drum driving motor, the method comprising the steps of determining the magnitude of a current ripple in AC power input to the washing machine for driving the motor, determining that said magnitude is below a threshold value, determining the voltage of said AC power and controlling the speed of the motor in dependence on said ripple magnitude and said voltage. The present invention also relates to a washing machine comprising a rotatable drum for receiving laundry, a motor for driving the drum, AC power input means for powering the motor, ripple current sensing means for sensing the ripple in the input AC power, voltage sensing means for sensing the voltage of input AC power, and control means configured to control the speed of the motor for spin drying operation in dependence on the magnitude of the sensed ripple current and on the voltage sensed by the voltage sensing means.

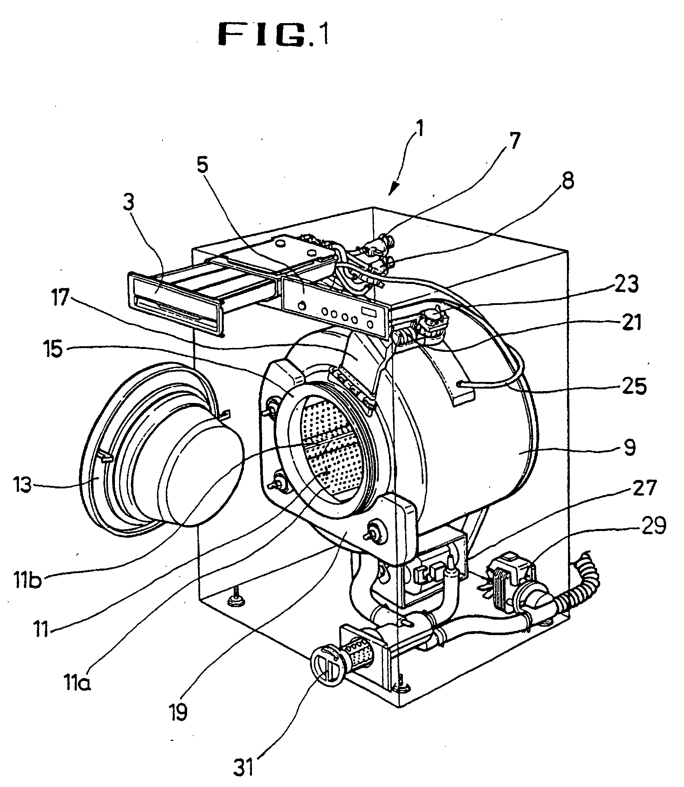

Drum washing machines typically include, as illustrated in Figure 1, a body 1, a detergent drawer 3, a control panel 5, both disposed at the top of the front of the body 1, and hot and cold water supply valves 7, 8 connected to a faucet (not shown) controlling the flow of hot and cold water into the machine.

The body 1 houses a outer drum 9 and a rotary inner drum 11 coaxially within the outer drum 9 for washing and spin-drying laundry. The outer drum 9 has an opening at the front about which a resilient collar 15 is located. A door 13 is provided for opening and closing the outer drum 9 and when closed sealingly engages the collar 15. A weight 19 for suppressing vibration of the drums 9, 11 during high-speed rotation of the inner drum 11, e.g. during spin drying, is mounted to the front of the outer drum 9.

An air vent 17 is connected to the collar 15 so that dry air can flow into the outer drum 9 during drying operations. A heater 21 is provided at the inlet end of the vent 17 for heating air flowing into the outer drum 9. A fan 23 is provided at the inlet end of the vent 17 for driving air, heated by the heater 21, into the outer drum 9.

The drying heater 21 is formed at one side thereof with a fan motor 23 for blowing high-temperature air provided by the drying heater 21 via the collar 15.

A hose 25 is connected to outer drum 9 for supplying cold water to condense vapour produced by the heated air driven into the outer drum 9 past the heater 21. A 3-phase induction motor 27 is mounted under the outer drum 9 for rotating the inner drum 10 in forward and reverse directions.

A drainage pump 29 is located on the floor of the body at the back for drawing water from the outer drum 9 and discharging it. The pump 29 draws the water through a hose and a filter 31, located at a bottom front corner of the body 1. The filter 31 can be removed for draining the washing machine in the event of the loss of electric power or failure of the pump 29.

The inner drum 11 is perforated with a plurality of holes 11a for allowing washing water in the outer drum 9 to flow into the inner drum 11. Agitators 11b are provided on the wall of the inner drum 11 for turning laundry in the inner drum 11 as it rotates. The agitators 11b are spaced 120° apart from one another.

With a conventional front-loading washing machine as described, when a user loads laundry (clothes) into the drums, operates the control panel 5 to input desired washing conditions (according to the kind of laundry, temperature, washing course, drying time and the like) and presses a start button, washing water is supplied into the outer drum 9 from faucets (not shown) through the hot and cold water valves 7, 8.

When sufficient washing water has been supplied into the outer drum 9, the inner drum 11 is rotated forwards and backwards by the motor 27 to effect cleaning of the laundry and, after this, the inner drum 11 is rotated at high speed to spin dry the laundry.

The ripple on the electrical current supplied to the motor 27 during the spin-dry operation is proportional to the imbalance generated by eccentricity of laundry when the inner drum 11 rotates at a high speed. The ripple is detected by a current sensor and the detected ripple is compared with a predetermined ripple magnitude. Then, if the detected ripple is larger than the predetermined value, the spin-dry operation is stopped or replaced with a fabric untangling operation.

However, since, in the conventional method, accurate detection of imbalance is difficult when an abnormal voltage, e.g. < 195V or > 250V, is applied to the washing machine.

DE-A-3416639 discloses a washing machine in which ripple magnitude and power supply voltage are taken into account for controlling spin speed.

A method according to the present invention is characterised by operating the motor at a predetermined speed when determining the magnitude of said apple, and the magnitude of said ripple is determined a predetermined time period after the motor has reached said predetermined speed.

Preferably, the method includes determining an imbalance mass value from said ripple magnitude and said voltage and controlling the speed of the motor in dependence on said imbalance mass value.

Preferably, the method includes the further steps of: -
determining the magnitude of a current ripple in AC power input to the washing machine for driving the motor;
determining that said magnitude is not below said threshold value; and
consequently performing a washing machine load distributing process..

A washing machine according to the present invention is characterised in that the control means is configured for operating the motor at a predetermined speed and determining the magnitude of said ripple, from the output of the ripple current sensing means, a predetermined time period after the motor has reached said predetermined speed.

Preferably, the control means is configured for determining an imbalance mass value from said ripple magnitude and said voltage and controlling the speed of the motor in dependence on said imbalance mass value.

Preferably, the control means is configured to control the motor for performing a load distributing process when the magnitude of the sensed current ripple in AC power input to the washing machine for driving the motor is not below a threshold value

An embodiment of the present invention will now be described, by way of example, with reference to the accompanying drawings, in which: -
Figure 1 is a perspective view a front-loading washing machine;
Figure 2 is a block diagram illustrating an imbalance detecting apparatus of a washing machine according to the present invention;
Figure 3 is a detailed circuit diagram of an imbalance detecting apparatus of a washing machine according to the present invention;
Figure 4 is a waveform diagram of the current ripple arising from an imbalance in the load in a washing machine according to the present invention;
Figure 5 shows data for current ripple against voltage variations; and
Figure 6 is a flow chart illustrating a sequence of steps for detecting a load imbalance in a washing machine according to the present invention.

Throughout the drawings, like reference numerals and symbols are used for designation of like or equivalent parts or portions as in Figure 1 for simplicity of illustration and explanation, and redundant desciption will be omitted.

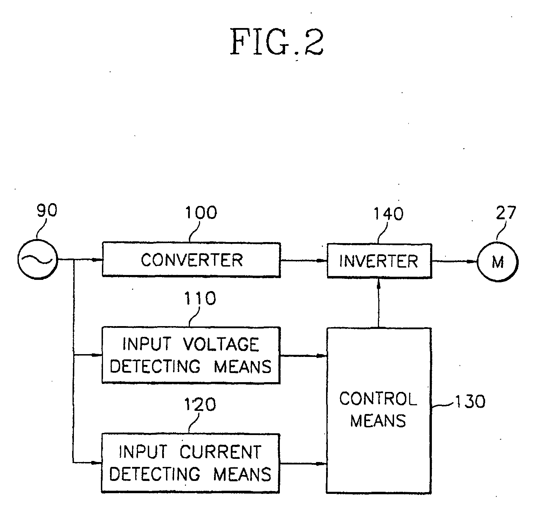

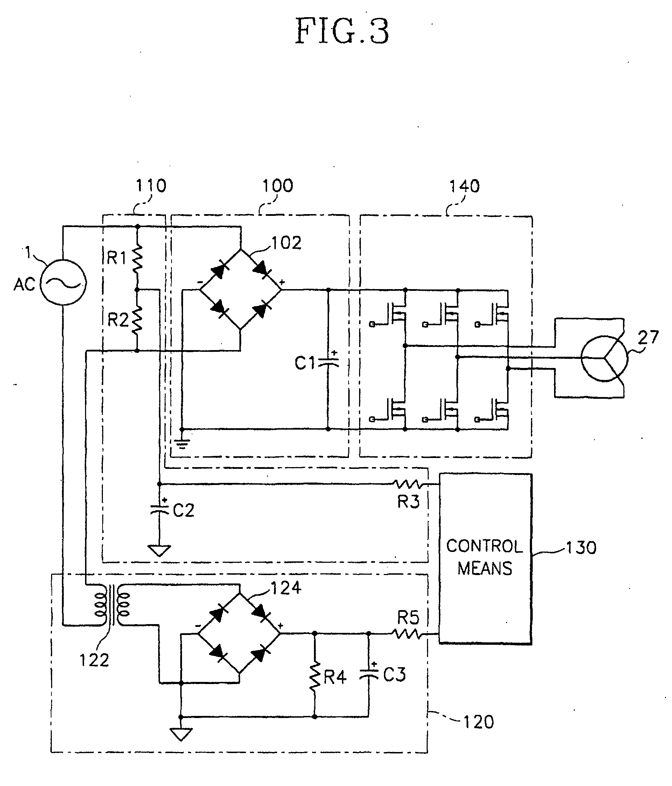

Referring to Figures 2 and 3, an AC-DC converter 100, for rectifying and smoothing AC power input from a power input terminal 90, includes a bridge rectifier 102 for rectifying the input AC and a smoothing capacitor C1 across the output terminals of the bridge rectifier 102.

An input voltage detecting means 110, serving to detect the AC voltage applied from the power input terminals 90, includes a potential divider comprising first and second resistors R1, R2, a capacitor C2, coupled between the junction between the first and second resistors R1, R2 and ground, and a third resistor R3. The third resistor R3 is connected between the junction between the first and second resistors R1, R2 and an input of a control means 130 (described below).

An input current detecting means 120 serves to detect the input AC current from the power input terminals 90 and includes a current sensor 122 for converting a ripple current component of the input power at the terminal 90 to a voltage, a bridge rectifier 124 for rectifying the voltage output by the current sensor 122, a capacitor C3 and fourth and fifth resistors R4, R5 for smoothing the output of the rectifier 124. The smoothed and rectified output of the bridge rectifier 124 is input to the control means 130.

The control means 130 classifies a load imbalance in the washing machine according to the input voltage variations detected by the input voltage detecting means 110. Then, the control means 130 compares the input current ripple, detected by the input current detecting means 120, with a predetermined ripple. Further, the control means 130 controls eccentricity adjusting and spin-drying processes according to the result of determining the load imbalance generated by eccentricity of laundry during high speed rotation of the inner drum 11 during spin drying. The control means 130 controls the duty cycles and frequencies of 3-phase outputs according to the speed and operation conditions of the motor 27.

An inverter 140 converts the DC power provided by the converter 130 into 3-phase (U-phase, V-phase and W-phase) AC power having variable frequency and voltage by sequentially turning on and off six (6) power transistors according to a driving signal output by the control means 130.

Operational effect of the imbalance detecting device and an operating method according to the present invention will now be described.

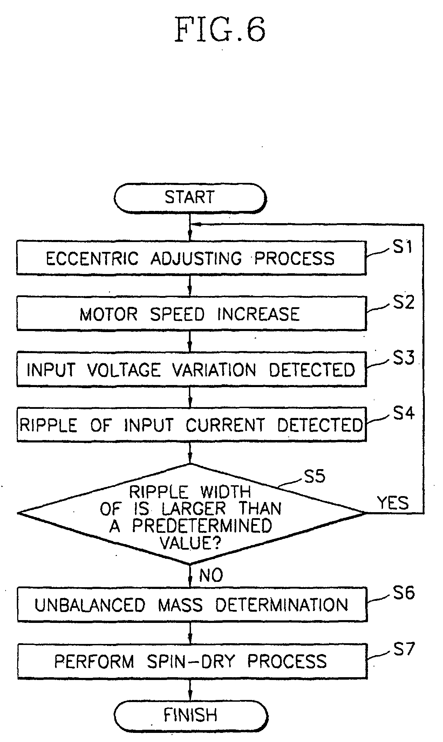

Referring to Figure 6, at step S1, a laundry eccentricity adjusting process is performed and, at step S2, the rotational speed of the motor 27 is increased to 90rpm, where the laundry is gathered up on a part of the inside wall of the drum 11, thereby resulting in an imbalance.

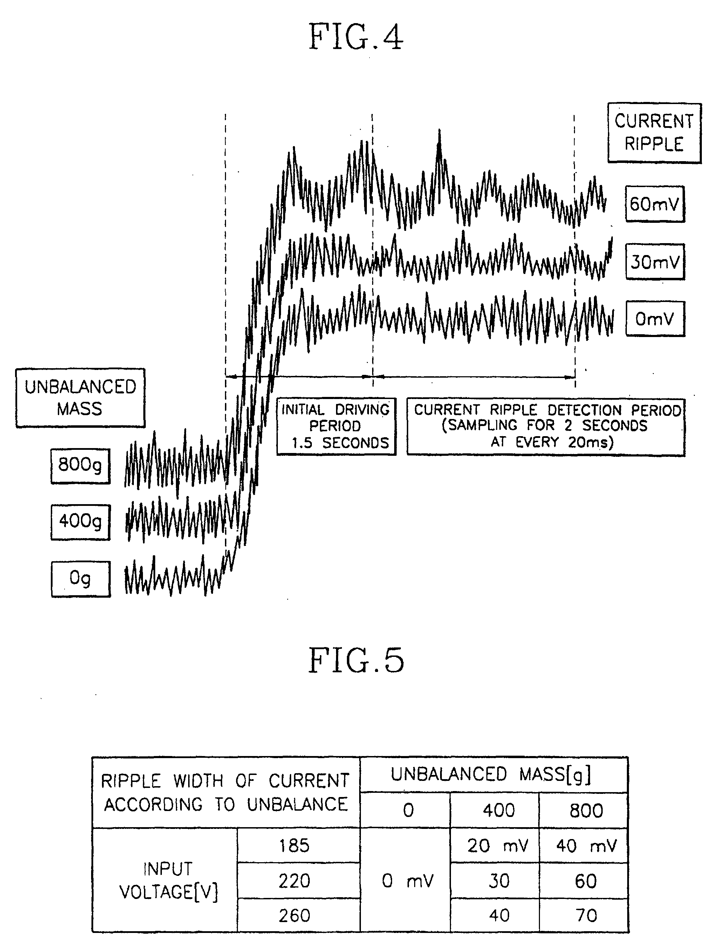

When the speed of the motor 27 is increased to 90rpm, a specific amount of ripple is generated in the input current, as illustrated in Figure 4, according to the load imbalance caused by the eccentricity of the laundry. The current ripple supplied to the motor 27 is proportional to the value of the imbalance.

At step S3, a variation in the input AC voltage from the power input terminals 90 is detected by the input voltage detecting means 110 and, at step S4, as illustrated in Figure 4, the speed of the motor 27 is increased for 1.5 seconds and the ripple of the current supplied to the motor 27 is detected and sampled at every 20ms for 2 seconds by the input current detecting means 120.

At step S5, the control means 130 obtains a difference between a maximum value and a minimum value of the ripple data of the current according to the ripple current detected by the input current detecting means 120 to determine whether the current ripple width is larger than a predetermined value.

As a result of the determination at step S5, if the current ripple is larger than the predetermined value (in case of YES), the control means 130 interprets it as indicating an excessive imbalance mass and then the control means returns to step S1 to perform the eccentricity adjusting process and repeatedly performs steps S1 to S5.

If, at step S5, the current ripple is less than the predetermined value (in case of NO), the control advances to step S6 and the control means 130 classifies the imbalance mass of the laundry by magnitude according to input voltage value detected by the input voltage detecting means 110, as illustrated in Figure 5.

At step S7, a spin-dry process at a speed corresponding to the imbalance mass determined at step S6 according to the input voltage value.

As apparent from the foregoing, there is an advantage in the imbalance detecting device and method of a washing machine according to the present invention, in that an imbalanced mass of washing machine is accurately classified and detected according to input voltage variation when the imbalance is detected by utilizing a ripple width of a current detected by a current sensor, thereby preventing errors from occurring in spin-dry process.

## Claims

1. A method of performing spin drying using a washing machine (1) having a drum driving motor (27), the method comprising the steps of: -
determining the magnitude of a current ripple in AC power input to the washing machine (1) for driving the motor (27);
determining that said magnitude is below a threshold value; and
determining the voltage of said AC power; and
controlling the speed of the motor (27) in dependence on said ripple magnitude and on said voltage,
**characterised by** operating the motor (27) at a predetermined speed when determining the magnitude of said ripple, and the magnitude of said ripple is determined a predetermined time period after the motor (27) has reached said predetermined speed.

2. A method according to claim 1, including determining an imbalance mass value from said ripple magnitude and said voltage, and controlling the speed of the motor (27) in dependence on said imbalance mass value.

3. A method according to claim 1 or 2, including the further steps of: -
determining the magnitude of a current ripple in AC power input to the washing machine (1) for driving the motor (27);
determining that said magnitude is not below said threshold value; and
consequently performing a washing machine load distributing process.

4. A washing machine comprising a rotatable drum (11) for receiving laundry, a motor (27) for driving the drum (11), AC power input means (90) for powering the motor (27), ripple current sensing means (120) for sensing the ripple in the input AC power, voltage sensing means (110) for sensing the voltage of input AC power and control means (130) configured to control the speed of the motor (27) for spin drying operation in dependence on the magnitude of the sensed ripple current and on the voltage sensed by the voltage sensing means, **characterised in that** the control means (130) is configured for operating the motor (27) at a predetermined speed and determining the magnitude of said ripple, from the output of the ripple current sensing means (120), a predetermined time period after the motor (27) has reached said predetermined speed.

5. A washing machine according to claim 4, wherein the control means (130) is configured for determining an imbalance mass value from said ripple magnitude and said voltage and controlling the speed of the motor (27) in dependence on said imbalance mass value.

6. A washing machine according to claim 4 or 5, wherein the control means (130) is configured to control the motor (27) for performing a load distributing process when the magnitude of the sensed current ripple in AC power input to the washing machine (1) for driving the motor (27) is not below a threshold value.

## Patentansprüche

1. Verfahren zum Durchführen des Schleudertrocknens unter Verwendung einer Waschmaschine (1) mit einem Trommelantriebsmotor (27), wobei das Verfahren die Schritte umfasst:
Ermitteln der Größe einer Stromwelligkeit in einem in die Waschmaschine (1) eingespeisten Wechselstrom zum Antreiben des Motors (27);
Feststellen, dass die Größe unterhalb eines Schwellenwerts liegt; und
Ermitteln der Spannung des Wechselstroms; und
Regeln der Drehzahl des Motors (27) in Abhängigkeit von der Welligkeitsgröße und der Spannung,
**gekennzeichnet durch** Betreiben des Motors (27) mit einer vorbestimmten Drehzahl, wenn die Größe der Welligkeit ermittelt wird, und **dadurch**, dass die Größe der Welligkeit einen vorbestimmten Zeitraum, nachdem der Motor (27) die vorbestimmte Drehzahl erreicht hat, ermittelt wird.

2. Verfahren nach Anspruch 1, einschließlich des Ermittelns eines Unwuchtmassenwerts aus der Welligkeitsgröße und der Spannung und des Regelns der Drehzahl des Motors (27) in Abhängigkeit von dem Unwuchtmassenwert.

3. Verfahren nach Anspruch 1 oder 2, einschließlich der weiteren Schritte:
Ermitteln der Größe einer Stromwelligkeit in einem in die Waschmaschine (1) eingespeisten Wechselstrom zum Antreiben des Motors (27);
Feststellen, dass die Größe nicht unterhalb des Schwellenwerts liegt; und
infolgedessen Durchführen eines Waschmaschinen-Lastverteilungsprozesses.

4. Waschmaschine mit einer drehbaren Trommel (11) zum Aufnehmen von Wäsche, einem Motor (27) zum Antreiben der Trommel (11), einem Wechselstrom-Einspeisungsmittel (90) zum Speisen des Motors (27), einem Welligkeitsstrom-Feststellungsmittel (120) zum Feststellen der Welligkeit im Eingangswechselstrom, einem Spannungsfeststellungsmittel (110) zum Feststellen der Spannung des Eingangswechselstroms und einem Regelungsmittel (130), das zum Regeln der Drehzahl des Motors (27) für einen Schleudertrocknungsvorgang in Abhängigkeit von der Größe des festgestellten Welligkeitsstroms und der vom Spannungsfeststellungsmittel festgestellten Spannung ausgelegt ist, **dadurch gekennzeichnet, dass** das Regelungsmittel (130) zum Betreiben des Motors (27) mit einer vorbestimmten Drehzahl und zum Ermitteln der Größe der Welligkeit aus dem Ausgangssignal des Welligkeitsstrom-Feststellungsmittels (120) einen vorbestimmten Zeitraum, nachdem der Motor (27) die vorbestimmte Drehzahl erreicht hat, ausgelegt ist.

5. Waschmaschine nach Anspruch 4, wobei das Regelungsmittel (130) zum Feststellen eines Unwuchtmassenwerts aus der Welligkeitsgröße und der Spannung und zum Regeln der Drehzahl des Motors (27) in Abhängigkeit von dem Unwuchtmassenwert ausgelegt ist.

6. Waschmaschine nach Anspruch 4 oder 5, wobei das Regelungsmittel (130) zum Regeln des Motors (27) zum Durchführen eines Lastverteilungsprozesses, wenn die Größe der festgestellten Stromwelligkeit in dem in die Waschmaschine (1) eingespeisten Wechselstrom zum Antreiben des Motors (27) nicht unterhalb eines Schwellenwerts liegt, ausgelegt ist.

## Revendications

1. Un procédé d'essorage utilisant une machine à laver (1) dotée d'un moteur (27) d'entraînement de tambour, le procédé comprenant les étapes consistant à :
déterminer l'amplitude d'une ondulation de courant de l'alimentation en courant alternatif CA fournie à la machine à laver (1) pour entraîner le moteur (27);
déterminer si ladite amplitude est inférieure à une valeur de seuil ; et
déterminer la tension de ladite alimentation en CA ; et
commander la vitesse du moteur (27) en fonction de ladite amplitude d'ondulation et de ladite tension,
**caractérisé en ce qu'**on fait fonctionner le moteur (27) à une vitesse prédéterminée quand on détermine l'amplitude de ladite ondulation, et **en ce que** l'amplitude de ladite ondulation est déterminée une période de temps prédéterminée après que le moteur (27) a atteint ladite vitesse prédéterminée.

2. Un procédé selon la revendication 1, comprenant les étapes consistant à déterminer une valeur de masse de déséquilibre à partir de ladite amplitude d'ondulation et de ladite tension, et à commander la vitesse du moteur (27) en fonction de ladite valeur de masse de déséquilibre.

3. Un procédé selon la revendication 1 ou 2, comprenant les autres étapes consistant à :
déterminer l'amplitude d'une ondulation du courant de l'alimentation en CA fournie à la machine à laver (1) pour entraîner le moteur (27) ;
déterminer si ladite amplitude n'est pas inférieure à ladite valeur de seuil ; et
effectuer en conséquence un processus de répartition de charge de la machine à laver.

4. Une machine à laver comprenant un tambour rotatif (11) destiné à recevoir du linge, un moteur (27) pour entraîner le tambour (11), des moyens d'alimentation en courant alternatif CA (90) pour alimenter le moteur (27), des moyens (120) de mesure de courant d'ondulation pour mesurer l'ondulation de l'alimentation en CA, des moyens de mesure de tension (110) pour mesurer la tension de l'alimentation en CA fournie et des moyens de commande (130) configures pour commander la vitesse du moteur (27) lors de l'essorage en fonction de l'amplitude du courant d'ondulation mesuré et de la tension mesurée par les moyens de mesure de tension, **caractérisée en ce que** les moyens de commande (130) sont configurés pour faire fonctionner le moteur (27) à une vitesse prédéterminée et pour déterminer l'amplitude de ladite ondulation, à partir de la sortie des moyens de mesure de courant d'ondulation (120), une période de temps prédéterminée après que le moteur (27) a atteint ladite vitesse prédéterminée.

5. Une machine à laver selon la revendication 4, dans laquelle les moyens de commande (130) sont configurés pour déterminer une valeur de masse de déséquilibre à partir de ladite amplitude d'ondulation et de ladite tension et pour commander la vitesse du moteur (27) en fonction de ladite valeur de masse de déséquilibre.

6. Une machine à laver selon la revendication 4 ou 5, dans laquelle les moyens de commande (130) sont configurés pour commander le moteur (27) pour réaliser un processus de répartition de charge lorsque l'amplitude de l'ondulation du courant mesuré dans l'alimentation en CA fournie à la machine à laver (1) pour entraîner le moteur (27) n'est pas inférieure à une valeur de seuil.
